# EUROPEAN PATENT SPECIFICATION

(11) **EP 3 607 115 B1**
(45) Date of publication and mention of the grant of the patent: **08.06.2022**
(21) Application number: 18713988.6
(22) Date of filing: 04.04.2018
(51) Int. Cl.: C25D 3/06, C25D 21/14, C25D 5/12, C25D 5/00

(54) **CONTROLLED METHOD FOR DEPOSITING A CHROMIUM OR CHROMIUM ALLOY LAYER ON AT LEAST ONE SUBSTRATE**
GESTEUERTES VERFAHREN ZUR ABSCHEIDUNG EINER CHROM- ODER CHROMLEGIERUNGSSCHICHT AUF MINDESTENS EINEM SUBSTRAT
PROCÉDÉ CONTRÔLÉ POUR DÉPOSER UNE COUCHE DE CHROME OU D'ALLIAGE DE CHROME SUR AU MOINS UN SUBSTRAT

(30) Priority: 04.04.2017 EP 17164733
(43) Date of publication of application: 12.02.2020
(73) Proprietor: Atotech Deutschland GmbH & Co. KG, 10553 Berlin (DE)
(72) Inventor: WALTER, Anke, 10553 Berlin (DE); YEVTUSHENKO, Oleksandra, 10553 Berlin (DE); PAULIG, Franziska, 10553 Berlin (DE)
(74) Representative: Atotech Deutschland GmbH & Co. KG
(86) International application number: PCT/EP2018/058578
(87) International publication number: WO 2018/185144

(56) References cited:
- RU-C1- 2 139 369
- US-A- 2 748 069
- US-A- 3 111 464
- US-A- 3 954 574
- US-A- 4 804 446

## Description

### Field of the Invention

The present invention relates to a controlled method for depositing a chromium or chromium alloy layer and an aqueous deposition bath. In particular the present invention refers to functional chromium layers, also called hard chromium layers.

### Background of the Invention

Functional chromium layers usually have a much higher average layer thickness (from at least 1 µm up to several hundreds of micro meters) compared to decorative chromium layers (typically below 1 µm) and are characterized by excellent hardness and wear resistance.

Functional chromium layers obtained from a deposition bath containing hexavalent chromium are known in the prior art and are a well-established standard. After chromium deposition, such chromium surfaces are typically post-treated in finishing or super-finishing steps. In these steps the chromium layer is additionally ground and polished to obtain a very smooth surface, typically exhibiting an average surface roughness (Rₐ) of 0.2 µm or less.

During recent decades, chromium deposition methods relying on hexavalent chromium are more and more replaced by deposition methods relying on trivalent chromium. Such trivalent chromium-based methods are much more health- and environment friendly.

WO 2015/110627 A1 refers to an electroplating bath for depositing chromium and to a method for depositing chromium on a substrate using said electroplating bath.

US 2,748,069 relates to an electroplating solution of chromium, which allows obtaining very quickly a chromium coating of very good physical and mechanical properties. The chromium plating solution can be used for special electrolyzing methods, such as those known as spot or plugging or penciling galvanoplasty. In such special methods the substrate is typically not immersed into a respective electroplating solution.

US 3,954,574 refers to the electrodeposition of chromium from aqueous solutions of trivalent chromium salts. A respective electroplating system contains trivalent chromium together with both formate or acetate and a bromide.

However, it has been observed that trivalent chromium-based methods often lead to a chromium or chromium alloy layer with a significantly high average surface roughness (Rₐ) (even up to 1.5 µm, based on an average layer thickness of at least 20 µm) compared to chromium layers obtained from hexavalent chromium-based methods (Rₐ typically in the range from 0.2 to 0.4 µm, based on an average layer thickness of at least 20 µm).

Furthermore, it has been observed in trivalent chromium-based methods that the average surface roughness of chromium or chromium alloy layers continually increases over long term usage of a utilized aqueous deposition bath. Own experiments have shown that a freshly prepared deposition bath mostly results in a desirable low average surface roughness. However, with intensive usage of the deposition bath the average surface roughness quickly increases such that the surface quality of the treated substrates continually decreases. Finally, substrates with a chromium or chromium alloy layer from a long time used deposition bath very often exhibit a lower surface quality (i.e. having a comparatively high average surface roughness) compared to substrates treated in a freshly prepared deposition bath. Of course it is desired to obtain substrates with constant surface quality.

Significant changes in the average surface roughness of substrates cause undesired disadvantages because well-established finishing and/or super-finishing steps, such as grinding and polishing, are very often developed and in particular customized for chromium layers obtained from hexavalent chromium-based methods, i.e. for substrates with an average surface roughness of usually less than 0.5 µm. These processes cannot easily adapted to layers with significantly higher average surface roughness or at least require sophisticated modifications, which typically increase costs and maintenance. Furthermore, if substrates have a varying surface quality, prior to said finishing steps the surface quality of the respective substrates must be individually and carefully determined in order to adapt the hardware used in the finishing steps. Such additional effort is much undesired.

### Objective of the present Invention

It was therefore the first objective of the present invention to provide a deposition method, based on trivalent chromium ions, for obtaining a substrate with a functional chromium or functional chromium alloy layer with an average surface roughness (Rₐ) very similar to the average surface roughness of layers obtained from hexavalent chromium-based methods. Furthermore, this method must ensure that these substrates exhibit this good and acceptable average surface roughness during a long usage of the deposition bath, preferably for the entire life time of the deposition bath. Thus, the obtained surface quality needs to be constant to the greatest extent possible. Furthermore, the method should be an "easy to control" method and preferably environmentally more acceptable. The second objective was to provide an aqueous deposition bath containing trivalent chromium ions, which is environmentally more acceptable and makes possible (i) said good and acceptable average surface roughness, and (ii) a functional chromium or functional chromium alloy layer with excellent hardness and wear resistance. Thus, such an aqueous deposition bath should be applicable in the above mentioned desired method.

### Summary of the Invention

The first objective is solved by a controlled method for depositing a chromium or chromium alloy layer on at least one substrate, the method comprising the steps
(a) providing an aqueous deposition bath, wherein
   the bath comprises
      - trivalent chromium ions,
      - bromide ions,
      - alkali metal cations in a total amount of 0 mol/L to 1 mol/L, based on the total volume of the deposition bath and referring to the sum of individual maximum amounts of metal cations of lithium, sodium, potassium, rubidium, cesium, and francium, and
   the bath has
   - a target pH within the range from 4.1 to 7.0,
(b) providing the at least one substrate and at least one anode,
(c) immersing the at least one substrate in the aqueous deposition bath and applying an electrical direct current such that the chromium or chromium alloy layer is deposited on the substrate, the substrate being the cathode,
   wherein during or after step (c) the pH of the deposition bath is lower than the target pH,
(d) adding NH₄OH and/or NH₃ during or after step (c) to the deposition bath such that the target pH of the deposition bath is recovered.

The second objective is solved by an aqueous deposition bath for depositing a chromium or chromium alloy layer, the bath comprising
(i) trivalent chromium ions in a total amount in the range from 17 g/L to 30 g/L, based on the total volume of the deposition bath,
(ii) at least one organic complexing compound,
(iii) ammonium ions,
(iv) at least one species of halide ions, wherein the at least one species is bromide, and
(v) alkali metal cations in a total amount of 0 mol/L to 1 mol/L, based on the total volume of the deposition bath and referring to the sum of individual maximum amounts of metal cations of lithium, sodium, potassium, rubidium, cesium, and francium,
wherein
- said trivalent chromium ions are from a soluble, trivalent chromium ion containing source, said source being utilized in a total weight of less than 100 g per liter aqueous deposition bath and said source comprising alkali metal cations in a total amount of 1 weight-% or less, based on the total weight of the utilized source,
- the pH of the bath is in the range from 4.1 to 7.0,
- the bath does not contain or contains a total amount of less than 10 mg/L, based on the total volume of the deposition bath, of sulfur containing compounds with a sulfur atom having an oxidation number below +6, and
- the bath does not contain or contains a total amount of less than 10 mg/L, based on the total volume of the deposition bath, of boron containing compounds.

### Brief description of the figures

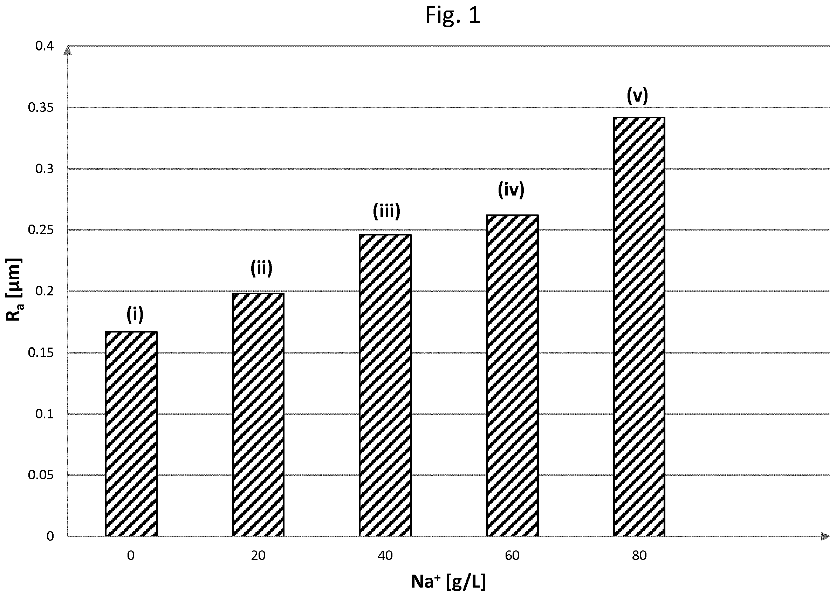

In Figure 1, a graphical representation of Example 1 is shown consisting of a plot, which depicts on the y-axis the average surface roughness (Rₐ) in µm and on the x-axis the total amount of alkali metal cations (represented as the total amount of sodium cations in g/L), based on the total volume of respective deposition bath samples. Each bar ((i) to (v)) represents a specimen. Further details are given in the "Examples" section below in the text.

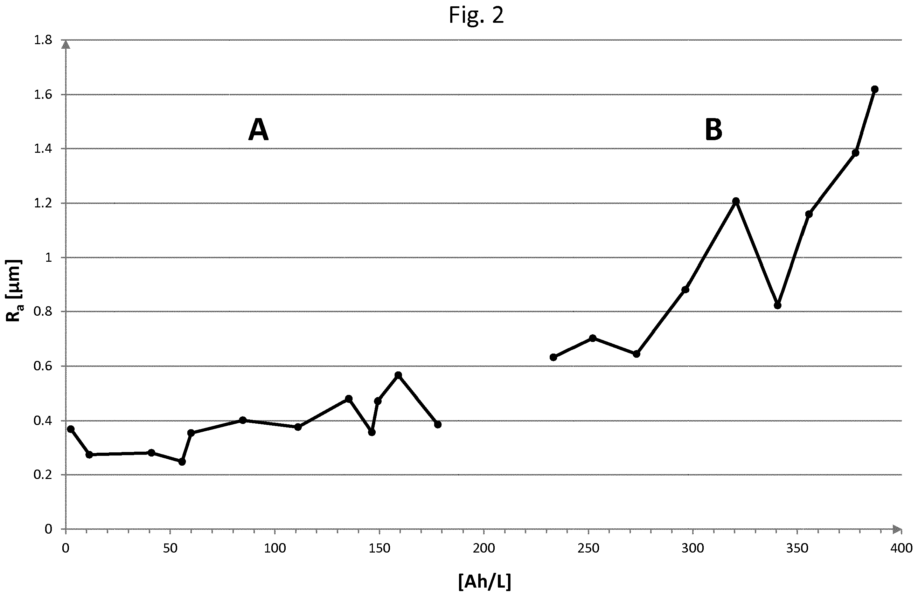

In Figure 2, a graphical representation of Example 2 is shown consisting of a plot, which depicts on the y-axis the average surface roughness (Rₐ) in µm and on the x-axis the usage of an aqueous deposition bath in Ah/L. The plot is split into two sections, A and B. Section A represents a method according to the present invention (addition of NH₄OH), wherein section B represents a method not according to the present invention (addition of NaOH). Sections A and B are interrupted by an interval from approximately 180 Ah/L to 230 Ah/L. During that interval the hydroxide replenishment was changed from NH₄OH to NaOH and dummy plating was carried out for a certain time. For further details see Example 2 in the "Examples" section below in the text.

### Detailed Description of the Invention

In the context of the present invention, the term "at least one" denotes (and is exchangeable with) "one, two, three or more than three". Furthermore, "trivalent chromium" refers to chromium with the oxidation number +3. The term "trivalent chromium ions" refers to Cr³⁺-ions in a free or complexed form. Likewise, "hexavalent chromium" refers to chromium with the oxidation number +6 and thereto related compounds including ions containing hexavalent chromium.

The method of the present invention includes steps (a) and (b), wherein the order is (a) and subsequently (b) or vice versa. Step (c) is carried out after both steps, (a) and (b), have been carried out.

The present invention relies on the finding (i) to run the method of the present invention with an aqueous deposition bath having a comparatively low total amount of alkali metal cations (for example with an aqueous deposition bath according to the present invention as described below in the text, or at least with an aqueous deposition bath containing a total amount of alkali metal cations of not more than 1 mol/L, based on the total volume of the deposition bath) and (ii) to maintain this comparatively low total amount of alkali metal cations during usage of the deposition bath, preferably during the entire life time of the deposition bath.

During the life time of such an aqueous deposition bath a large amount of chemicals is usually added into the bath, which potentially could contaminate the deposition bath. A first major contributor to alkali metal cation contamination in deposition methods for functional chromium layers is the source of hydroxide. During the operation of a corresponding aqueous deposition bath the pH typically decreases and is very frequently recovered by adding a hydroxide, often containing alkali metal cations.

Furthermore, trivalent chromium ions are consumed during the deposition and said ions must be replenished. This is a second major contributor to alkali metal cation contamination because in many cases these sources comprise severe amounts of alkali metal cations.

Therefore, it is crucial to select hydroxide sources and soluble, trivalent chromium ion containing sources containing a low amount of or even no alkali metal cations in order to maintain a total amount of alkali metal cations in the aqueous deposition bath in the range from 0 mol/L to a maximum of 1 mol/L, based on the total volume of the deposition bath.

It is basically assumed that an increasing total amount of alkali metal cations in the bath results in a correspondingly increasing average surface roughness of the deposited chromium or chromium alloy layer (see experiments below). It appears that the total amount of alkali metal cations in the deposition bath crucially affects the average surface roughness of the chromium or chromium alloy layer deposited in step (c).

Own experiments indicate that the maximum tolerable total amount of alkali metal cations in the deposition bath is 1 mol/L, based on the total volume of the deposition bath. Preferred is a method of the present invention, wherein the total amount of alkali metal cations in the deposition bath is in the range from 0 mol/L to 0.8 mol/L, based on the total volume of the deposition bath, preferably in the range from 0 mol/L to 0.6 mol/L, more preferably in the range from 0 mol/L to 0.4 mol/L, even more preferably in the range from 0 mol/L to 0.2 mol/L. Most preferably the deposition bath contains alkali metal cations in a total amount from 0 mol/L to 0.08 mol/L or at best does not at all contain any alkali metal cations. According to own experiments, the lower the total amount of alkali metal cations in the deposition bath is the more reliably constant is the average surface roughness over a long usage of a respective deposition bath.

In the context of the present invention "constant" does not necessarily denote that all substrates have an identical average surface roughness. It rather denotes that the average surface roughness remains within a reasonable range that is suitable and desirable for common finishing steps, for example within a range between 0.2 µm to 0.6 µm (see Example 2 and compare Fig. 2).

The term "total amount of alkali metal cations" refers to the sum of individual maximum amounts of metal cations of lithium, sodium, potassium, rubidium, cesium, and francium.

Own experiments have shown that the method of the present invention results in very smooth chromium and chromium alloy layers relative to the initial average surface roughness of the substrate prior to step (c) of the method of the present invention. In other words, the method of the present invention does not increase the average surface roughness of a substrate to an undesired extent. Furthermore, in the method of the present invention this effect is not only achieved for a few substrates at the beginning of the method (or after an aqueous deposition bath has been freshly prepared) but is even obtained throughout a long usage of the deposition bath. This can be reliably achieved if the total amount of alkali metal cations is carefully controlled by not exceeding 1 mol/L or preferably is far below 1 mol/L, and if the target pH is recovered by adding NH₄OH and/or NH₃. Such a controlled method allows a continuous operation with constant surface quality.

Thus, a method of the present invention is preferred, wherein the method is a continuous method. This means that
A: steps (a) to (d) are continually repeated, and/or
B: step (c) is at least once repeated with another substrate before step (d) is carried out.

Scenario "B" preferably includes that step (c) is repeated several times with other substrates before step (d) is carried out. After step (d) is finished, the deposition bath obtained after step (d) is provided in step (a) and the continuous method proceeds. This also includes that the aqueous deposition bath obtained after step (d) does not exceed the maximum tolerable total amount of alkali metal cations of 1 mol/L or preferably of upper limits defined above as being preferred.

Preferred is a method of the present invention, wherein the aqueous deposition bath provided in step (a) is repeatedly utilized in the method of the present invention, preferably for a usage of at least 100 Ah per liter aqueous deposition bath, preferably at least 150 Ah per liter, more preferably at least 200 Ah per liter, most preferably at least 300 Ah per liter.

If the total amount of alkali metal cations significantly exceeds 1 mol/L in many cases the average surface roughness reaches an undesired extent relative to the initial surface roughness prior to step (c) and the surface quality continually decreases over a long usage of the respective deposition bath.

The method of the present invention is specifically designed for an aqueous deposition bath having a target pH within the range from 4.1 to 7.0 (at 20°C). The method is not compatible with an identical deposition bath, provided in step (a), with the only exception of having a pH significantly below 4.1 because if the pH is significantly below 4.1 undesired precipitation occurs. Furthermore, if the pH is significantly below 4.1 or significantly above 7 no functional chromium layer or chromium alloy layer with sufficient wear resistance and hardness is obtained.

Preferred is a method of the present invention, wherein the target pH is within the range from 4.5 to 6.5, preferably within the range from 5.0 to 6.0, most preferably within the range from 5.3 to 5.9. Optimal results in terms of functional chromium and chromium alloy layers were obtained at a target pH within the range from 5.0 to 6.0; best results at a target pH within the range from 5.3 to 5.9. Functional chromium layers and functional chromium alloy layers obtained from an aqueous deposition bath with such a target pH exhibit a good or even excellent wear resistance and hardness. The above and below mentioned pH ranges and values are also referenced to a temperature of 20°C. According to own experiments, the at least one substrate obtained after step (c) exhibits a Vickers Hardness of at least 700 HV_{(0.05)} (determined with 50 g "load"). The wear resistance is comparatively good as the wear resistance obtained from hexavalent chromium based deposition methods.

In step (d) of the method of the present invention the target pH is recovered (reestablished) by adding NH₄OH and/or NH₃ because during or after step (c) the pH of the deposition bath is typically lower than prior to step (c). Although after each step (c) the pH of the deposition bath might be slightly lower than prior to step (c), it is not necessarily required to recover the target pH in step (d) during or after each step (c). The skilled person knows that the target pH must be recovered if the pH of the deposition bath runs during or after step (c) outside a pre-defined tolerance range. In the method of the present invention, during or after step (c), the pH of the deposition bath does not come below the pH of 4.1 or exceeds the pH of 7.0. Preferably, during or after step (c), the pH does not come below or exceeds the above mentioned preferred pH ranges if they are applied.

Preferably, the target pH in step (a) of the method of the present invention comprises a tolerance range of ± (plus/minus) 0.3 pH units (i.e. the tolerance range is from -0.3 to +0.3 pH units around the target pH and includes all values in between), preferably a tolerance range of ± (plus/minus) 0.2 pH units. This most preferably applies to the above mentioned preferred ranges from 5.0 to 6.0 and 5.3 to 5.9. The tolerance range does not lead to a target pH coming below or above the defined maximum pH range of 4.1 to 7.0 or, if applied, the other aforementioned preferred pH ranges. If such a target pH is recovered in step (d) it is preferred to recover a pH value within the tolerance range. For example: In step (a) the target pH is 6.4 and comprises a tolerance range of ± 0.2 pH units, leading to a range of 6.2 to 6.6 for the target pH. In step (d) the target pH is recovered by obtaining any pH within the tolerance range, e.g. a pH of 6.3 or 6.45, etc. Thus, a method of the present invention is preferred, wherein the target pH in step (a) comprises a tolerance range of ± 0.3 pH units, preferably of ± 0.2 pH units, and in step (d) the target pH is recovered by recovering a pH value within the tolerance range. Most preferably, one single target pH (preferably comprising the above mentioned tolerance range) is defined and, thus, to be recovered for the entire life time of the aqueous deposition bath. In other words, one single target pH (preferably comprising the above mentioned tolerance range) is defined for all steps (a) and recovered in a number of steps (d) if the method of the present invention is carried out as a continuous method.

In other applications it is preferred that the target pH in step (a) (preferably with one of the above mentioned tolerance ranges) is within the preferred pH range from 5.0 to 6.0 (preferably in the pH range from 5.3 to 5.9), and in step (d) the target pH is recovered to a pH within that pH range from 5.0 to 6.0 (preferably within that pH range from 5.3 to 5.9).

In step (d) NH₄OH and/or NH₃ are added. Preferably no other hydroxide is additionally added. In the method of the present invention, NH₄OH and NH₃ are the only compounds utilized in step (d).

In the method of the present invention, said trivalent chromium ions in the aqueous deposition bath are from a soluble, trivalent chromium ion containing source, typically a water soluble salt comprising said trivalent chromium ions. Preferably, the soluble, trivalent chromium ion containing source comprises alkali metal cations in a total amount of 1 weight-% or less, based on the total weight of said source. Most preferably, such a source is utilized for replenishing trivalent chromium ions if the method is operated continuously. A preferred water soluble salt comprising said trivalent chromium ions is alkali metal free trivalent chromium sulfate or alkali metal free trivalent chromium chloride. Thus, in some cases it is preferred that the aqueous deposition bath utilized in the method of the present invention contains sulfate ions, preferably in a total amount in the range from 50 g/L to 250 g/L, based on the total volume of the deposition bath.

Preferred is a method of the present invention, wherein the soluble, trivalent chromium ion containing source is utilized in the aqueous deposition bath in a total weight of less than 100 g per liter aqueous deposition bath; in particular if the aqueous deposition bath is freshly prepared. Typically, if trivalent chromium ions are replenished during usage of the aqueous deposition bath, amounts of the source significantly lower than 100 g per liter aqueous deposition bath are preferably utilized.

Preferred is a method of the present invention, wherein the total amount of the trivalent chromium ions in the deposition bath is in the range from 10 g/L to 30 g/L, based on the total volume of the deposition bath, preferably in the range from 17 g/L to 24 g/L. If the total amount is significantly below 10 g/L in many cases an insufficient deposition is observed and the deposited chromium or chromium alloy layer is usually of low quality. If the total amount is significantly above 30 g/L, the deposition bath is not any longer stable, which includes formation of undesired precipitates.

In the method of the present invention the aqueous deposition bath comprises bromide ions, preferably in a total amount of at least 0.06 mol/L, based on the total volume of the deposition bath, preferably at least 0.1 mol/L, more preferably at least 0.15 mol/L. Bromide ions effectively suppress the formation of anodically formed hexavalent chromium.

In the method of the present invention, the aqueous deposition bath preferably contains at least one further compound selected from the group consisting of at least one organic complexing compound, and ammonium ions. Preferred organic complexing compounds are carboxylic organic acids and salts thereof, preferably aliphatic mono carboxylic organic acids and salts thereof. More preferably the aforementioned organic complexing compounds (and its preferred variants) have 1 to 10 carbon atoms, preferably 1 to 5 carbon atoms, even more preferably 1 to 3 carbon atoms. Complexing compounds primarily form complexes with the trivalent chromium ions in the aqueous deposition bath to increase bath stability. Preferably, the molar ratio of the trivalent chromium ions to the organic complexing compounds is in the range from 1:0.5 to 1:10. Ammonium ions are either provided only by means of the NH₄OH and the NH₃ added in step (d) of the method of the present invention or are additionally added, preferably in step (d).

Preferred is a method of the present invention, wherein the aqueous deposition bath does not contain sulfur containing compounds with a sulfur atom having an oxidation number below +6 and boron containing compounds.

The term "does not contain" denotes that for example said sulfur containing compounds and boron containing compounds are not intentionally added to the aqueous deposition bath. In other words, the aqueous deposition bath is substantially free of such compounds. This does not exclude that such compounds are dragged in as impurities of other chemicals (a total amount of less than 10 mg/L of said sulfur containing compounds and a total amount of less than 10 mg/L of said boron containing compounds, each based on the total volume of the deposition bath). However, typically the total amount of such compounds is below the detection range and therefore not critical during step (c) of the method of the present invention.

It is assumed that the absence of said sulfur containing compounds results in an amorphous chromium layer and chromium alloy layer, respectively. Thus, a method of the present invention is preferred, wherein the layer deposited in step (c) is amorphous, determined by x-ray diffraction. This applies to the chromium or chromium alloy layer obtained during step (c) of the method of the present invention and prior to any further post-deposition surface treatment that affects the atomic structure of the deposited layer, changing it from amorphous to crystalline or partly crystalline. It is furthermore assumed that such sulfur containing compounds negatively affect the hardness of the functional chromium or functional chromium alloy layer deposited in step (c).

In the aqueous deposition bath utilized in the method of the present invention boron containing compounds are not desired because they are environmentally problematic. Containing boron containing compounds, waste water treatment is expensive and time consuming. Furthermore, boric acid which is known as well working buffer compound typically shows poor solubility and therefore has the tendency to form precipitates. Although such precipitates can be solubilized upon heating, a respective aqueous deposition bath cannot be utilized during this time. There is a significant risk that such precipitates facilitate an undesired surface roughness. Thus, the aqueous deposition bath utilized in the method of the present invention preferably does not contain boron containing compounds. Surprisingly, the aqueous deposition bath utilized in the method of the present invention performs very well without boron containing compounds, in particular in the above mentioned preferred pH ranges.

In the method of the present invention no hexavalent chromium is intentionally added to the aqueous deposition bath. Thus, the aqueous deposition bath does not contain hexavalent chromium except very tiny amounts which may be formed anodically.

The aqueous deposition bath utilized in the method of the present invention is sensitive to a number of metal cations which are undesired. Hence, preferred is a method of the present invention, wherein the aqueous deposition bath contains copper ions, zinc ions, nickel ions, and iron ions, each independently in a total amount of 0 mg/L to 40 mg/L, based on the total volume of the deposition bath, preferably each independently in a total amount of 0 mg/L to 20 mg/L, most preferably each independently in a total amount of 0 mg/L to 10 mg/L. This preferably also includes compounds comprising said metal cations. Most preferred, none of the above mentioned metal cations are present at all, i.e. they are present each independently in a total amount of zero mg/L. However, own experimental results have shown that a tiny amount of these metal cations can be tolerated. If these tiny amounts are present, these amounts are insufficient to serve as alloying metal in order to form a chromium alloy layer on the at least one substrate. If the above mentioned total amount is significantly exceeded, the chromium layer and chromium alloy layer deposited in step (c) of the method of the present invention exhibits undesired discolorations. Even more preferably, in the aqueous deposition bath utilized in the method of the present invention, chromium is the only side group element.

Furthermore, a method of the present invention is preferred, wherein the aqueous deposition bath does not comprise glycine, aluminium ions, and tin ions. This ensures a functional chromium and chromium alloy layer, respectively, with the desired attributes as outlined throughout the text. Own experiments have shown that in a number of cases aluminium and tin ions, in particular aluminium ions, significantly disturb and even inhibit the deposition in step (c).

In step (b) of the method of the present invention the at least one substrate and the at least one anode is provided, wherein the at least one substrate is the cathode. Preferably, more than one substrate is utilized in the method of the present invention simultaneously.

Preferred is a method of the present invention, wherein the at least one substrate provided in step (b) is a metal or metal alloy substrate, preferably a metal or metal alloy substrate independently comprising one or more than one metal selected from the group consisting of copper, iron, nickel, and aluminium, more preferably a metal or metal alloy substrate comprising iron. Most preferably, the at least one substrate is a steel substrate, which is a metal alloy substrate comprising iron. In many technical applications a steel substrate with a smooth, wear resistant functional chromium or chromium alloy layer is needed. This can in particular be achieved by the method of the present invention.

In some cases a method of the present invention is preferred, wherein the at least one substrate, preferably said metal substrate, most preferably said steel substrate, does not exhibit a pre-ground and/or pre-polished surface. In other words, the surface of the substrate exhibits an initial average surface roughness Rₐ of 0.2 µm or more, prior to step (c) of the method of the present invention, for example an average surface roughness of 0.25 µm or more, or even of 0.3 µm or more. In such cases the method of the present invention advantageously (i) does not increase the average surface roughness of the substrate to an undesired extent after step (c) is completed and (ii) ensures a constantly low average surface roughness over a long usage of the aqueous deposition bath.

However, in other cases it is preferred that the surface is already pre-ground and/or pre-polished. In such a case the initial average surface roughness Rₐ is preferably less than 0.2 µm prior to step (c) of the method of the present invention, for example 0.17 µm or less. In such cases the method of the present invention also does not increase the average surface roughness of the substrate to an undesired extent after step (c) is completed and (ii) ensures a constantly low average surface roughness over a long usage of the aqueous deposition bath.

In some cases the at least one substrate is preferably a coated substrate, more preferably a coated metal substrate (for preferred metal substrates see the text above). The coating is preferably a metal or metal alloy layer, preferably a nickel or nickel alloy layer, most preferably a semibright nickel layer. In particular preferred is a steel substrate coated with a nickel or nickel alloy layer. However, preferably other coatings are alternatively or additionally present. In many cases such a coating significantly increases corrosion resistance compared to a metal substrate without such a coating. However, in some cases the substrates are not susceptible to corrosion due to a corrosion inert environment (e.g. in an oil bath). In such a case a coating, preferably a nickel or nickel alloy layer, is not necessarily needed.

Therefore, preferred is a method of the present invention, wherein
in step (c) the chromium or chromium alloy layer is directly deposited onto the at least one substrate, or
the at least one substrate defined in step (b) additionally comprises a nickel or nickel alloy layer and in step (c) the chromium or chromium alloy layer is deposited thereon.

Preferred is a method of the present invention, wherein the at least one anode is independently selected from the group consisting of graphite anodes and mixed metal oxide anodes (MMO), preferably independently selected from the group consisting of graphite anodes and anodes of mixed metal oxide on titanium. Such anodes have shown to be sufficiently resistant in the deposition bath of the present invention.

Preferably, the at least one anode does not contain any lead or chromium.

In step (c) of the method of the present invention either a chromium layer or a chromium alloy layer is deposited. In most cases, a method of the present invention is preferred, wherein the layer deposited in step (c) of the method of the present invention is a chromium alloy layer. Preferred alloying elements are carbon and oxygen. Carbon is typically present because of organic compounds usually present in the aqueous deposition bath. Preferably, the chromium alloy layer does not comprise one, more than one or all elements selected from the group consisting of sulfur, nickel, copper, aluminium, tin and iron. More preferably, the only alloying elements are carbon and/or oxygen, most preferably carbon and oxygen. Preferably, the chromium alloy layer contains 90 weight percent chromium or more, based on the total weight of the alloy layer, more preferably 95 weight percent or more.

Preferred is a method of the present invention, wherein the cathodic current density of the electrical direct current is in the range from 5 A/dm² to 100 A/dm², preferably in the range from 10 A/dm² to 70 A/dm², more preferably in the range from 20 A/dm² to 60 A/dm².

The electrical current is a direct current (DC), more preferably a direct current without interruptions during step (c). The direct current is preferably not pulsed (non-pulsed DC). Furthermore, the direct current preferably does not include reverse pulses.

As already mentioned above, in the method of the present invention, the layer obtained in step (c) is preferably a functional chromium or functional chromium alloy layer (also often referred to as a hard chromium layer or hard chromium alloy layer) and not a decorative chromium or chromium alloy layer. Thus, a method of the present invention is preferred, wherein the average layer thickness of the chromium or chromium alloy layer deposited in step (c) is 1.0 µm or more, preferably 2 µm or more, more preferably 4 µm or more, even more preferably 5 µm or more, most preferably the average layer thickness is in the range from 5 µm to 200 µm, preferably 5 µm to 150 µm. These are typical average layer thicknesses for functional chromium or chromium alloy layers. Such thicknesses are needed to provide the needed wear resistance, which is typically demanded. In some cases the lower limit preferably and specifically includes 10 µm, 15 µm or 20 µm.

Preferred is a method of the present invention, wherein the aqueous deposition bath in step (c) has a temperature in the range from 20°C to 90°C, preferably in the range from 30°C to 70°C, more preferably in the range from 40°C to 60°C, most preferably in the range from 45°C to 60°C. If the temperature significantly exceeds 90°C, an undesired vaporization occurs, which negatively affects the concentration of the bath components (even up to the danger of precipitation). Furthermore, the undesired anodic formation of hexavalent chromium is significantly less suppressed. If the temperature is significantly below 20°C the deposition is insufficient. Temperatures significantly below 40°C are generally acceptable but in a few cases the deposition quality and the extent of deposition are not sufficient, in particular between 20°C und 35°C. In a number of cases the chromium and chromium alloy layer gets undesirably dull, adhesion of said layer and deposition rate is low, and reproducibility is in some cases difficult. However, optimal and improved results are obtained at a temperature of at least 40°C, preferably a temperature in the range from 40°C to 90°C, more preferably in the range from 40°C to 70°C, even more preferably in the range from 40°C to 60°C. Most preferred is a temperature of at least 45°C, preferably a temperature in the range from 45°C to 90°C, more preferably in the range from 45°C to 70°C, even more preferably in the range from 45°C to 60°C.

During step (c), the aqueous deposition bath is preferably continually agitated, preferably by stirring.

Preferred is a method of the present invention, wherein the layer deposited in step (c) has an average surface roughness Rₐ of 0.6 µm or less, based on an average layer thickness of at least 20 µm, preferably of 0.5 µm or less, more preferably of 0.4 µm or less. This most preferably applies to steel substrates (preferably steel substrates as described throughout the present text). A substrate with a chromium layer or chromium alloy layer exhibiting such an average layer thickness is very much desired and can easily subjected to common finishing and/or super-finishing steps.

In many cases a method of the present invention is preferred, wherein the substrate obtained after step (c) is subjected to a heat treatment at a temperature of 250°C or less. Such a heating is typically applied in order to harden the functional chromium or chromium alloy layer. However, a method of the present invention is preferred not comprising after step (c) a heat treatment step at a temperature of 500°C or more, preferably of 400°C or more, even more preferably of 300°C or more, most preferably of 260°C or more.

In the method of the present invention it is preferred that the at least one substrate and the at least one anode are present in the aqueous deposition bath such that the trivalent chromium ions are in contact with the at least one anode. In such a preferred method a membrane or a diaphragm can entirely be avoided to separate the trivalent chromium ions from the anode (i.e. no additional compartments are formed). In other words, in the method of the present invention no separation means are utilized in order to separate the trivalent chromium ions in the deposition bath from the anode. This reduces costs, maintenance effort and allows a simplified operation of the method of the present invention.

As already mentioned above, the present invention also refers to an aqueous deposition bath. Regarding this deposition bath, the aforementioned features regarding the method of the present invention (including features in particular applying to the aqueous deposition bath utilized in said method) preferably apply likewise to the aqueous deposition bath of the present invention and vice versa. More preferably, the aqueous deposition bath according to the present invention is utilized in the above discussed method of the present invention.

For further details regarding the total amount of trivalent chromium ions in the deposition bath and molar ratios with complexing compounds, see the text above regarding the method of the present invention.

Preferred is an aqueous deposition bath according to the present invention, wherein the at least one organic complexing compound is selected from the group of carboxylic organic acids and salts thereof, preferably selected from the group of aliphatic mono carboxylic organic acids and salts thereof. More preferably the aforementioned organic complexing compounds (and its preferred variants) have 1 to 10 carbon atoms, preferably 1 to 5 carbon atoms, even more preferably 1 to 3 carbon atoms.

Preferred is an aqueous deposition bath according to the present invention, wherein the sum of the total weight of the trivalent chromium ions and the total weight of the ammonium ions corresponds to 90 weight-% or more of the total weight of all cations in the aqueous deposition bath, preferably 95 weight-% or more, more preferably 98 weight-% or more. Thus, essentially the entire amount of cations in the deposition bath is formed by said trivalent chromium ions and said ammonium ions.

In the aqueous deposition bath according to the present invention the at least one species of halide ions is bromide. Preferably, the total amount of bromide ions in the deposition bath is at least 0.06 mol/L, based on the total volume of the deposition bath, preferably at least 0.1 mol/L, more preferably at least 0.15 mol/L.

Preferred is an aqueous deposition bath according to the present invention, wherein the total amount of alkali metal cations in the aqueous deposition bath is in the range from 0 mol/L to 0.5 mol/L, preferably in the range from 0 mol/L to 0.3 mol/L, more preferably in the range from 0 mol/L to 0.1 mol/L, most preferably in the range from 0 mol/L to 0.08 mol/L.

Preferred is an aqueous deposition bath according to the present invention not containing iron ions, nitrogen containing compounds other than NH₄⁺ and NH₃, and reducing agents for reducing said trivalent chromium ions.

Preferred is an aqueous deposition bath according to the present invention, wherein the soluble, trivalent chromium ion containing source comprises or is chromium sulfate, preferably acidic chromium sulfate, more preferably chromium sulfate with the general formula Cr₂(SO₄)₃ and a molecular weight of 392 g/mol. This chromium sulfate can preferably utilized in a total weight of significantly less than 100 g per liter aqueous deposition bath and furthermore usually comprises alkali metal cations in a total amount of 1 weight-% or less, based on the total weight of said utilized chromium sulfate. It is desired to keep the total weight of the soluble, trivalent chromium ion containing source, utilized in the aqueous deposition bath according to the present invention, below 100 gram per liter. This reduces the risk of contamination, not only of alkali metal cations but also of other undesired cations (see text above) and chromium counter ions. It has to be noted that the method of the present invention and the aqueous deposition bath of the present invention are specifically designed for industrial application and long term usage (i.e. usage over weeks and month). During such a long usage, the trivalent chromium ions in the aqueous deposition bath are replenished several times such that also supposedly tiny contaminations contained in the soluble, trivalent chromium ion containing source accumulate significantly over time. Such an effect can at least be minimized by optimizing the amount of the utilized soluble, trivalent chromium ion containing source.

Preferably, the soluble, trivalent chromium ion containing source is utilized in the aqueous deposition bath of the present invention in its dissolved form as an aqueous solution.

In this form, the soluble, trivalent chromium ion containing source does not contain crystal water (if present in a source in its solid form). Therefore, it is preferred that the soluble, trivalent chromium ion containing source being utilized is not solid (i.e. is not utilized in its solid form when used for replenishment). If the source is solid in some cases it undesirably affects the average surface roughness.

Thus, preferred is an aqueous deposition bath according to the present invention, wherein the source is utilized in a total weight in the range from 70 g to 99.9 g per liter aqueous deposition bath, preferably in the range from 70 g to 99 g, more preferably in the range from 70 g to 95 g, most preferably in the range from 70 g to 90 g.

Preferred is an aqueous deposition bath according to the present invention, wherein the pH of the bath is in the range from 4.5 to 6.5, preferably in the range from 5.0 to 6.0, most preferably in the range from 5.3 to 5.9. For further details regarding pH see the text above regarding the method of the present invention.

The present invention is described in more detail by the following non limiting examples.

### Examples

### Example 1

In a first step five deposition bath samples ((I), (II), (III), (IV), and (V); approximately 1 L each) have been prepared, each sample identically containing a typical amount of 10 g/L to 30 g/L trivalent chromium ions, 50 g/L to 250 g/L sulfate ions, at least one organic complexing compound (an aliphatic mono carboxylic organic acid), ammonium ions, and bromide ions. No boron containing compounds have been used.

In each deposition bath sample a soluble, trivalent chromium ion containing source (dissolved Cr₂(SO₄)₃; molecular weight: 392 g/mol) was utilized. The total amount of said source was in each case approximately 75 g per liter aqueous deposition bath sample, which is significantly below 100 g per liter deposition bath sample. Furthermore, said source was substantially free of alkali metal cations.

The pH of each sample was in the range from 5.3 to 5.9 (at 20°C) and adjusted with alkali metal cation free compounds. However, each deposition bath sample differed in the total amount of alkali metal cations, represented by sodium ions (molar mass 23 g/mol), according to Table 1. The amounts of sodium ions were intentionally added to the corresponding deposition bath samples. The total amount is based on the total volume of the corresponding deposition bath sample. Only into deposition bath sample (I) no sodium ions were intentionally added.

**Table 1**

| deposition bath sample | Na⁺ [g/L] |
|---|---|
| (I) | 0 |
| (II) | 20 |
| (III) | 40 |
| (IV) | 60 |
| (V) | 80 |

Deposition bath samples (I) and (II) are according to the present invention, wherein samples (III), (IV), and (V) are comparative examples.

In a second step five specimens (10 mm diameter mild steel rods with pre-ground and polished surfaces; initial Rₐ < 0.2 µm) were pre-coated with a semibright nickel layer (standard nickel deposition bath, Atotech, Mark 1900; cathodic current density 4 A/dm² for 10 minutes) to obtain nickel coated specimens. After said nickel deposition, the average surface roughness Rₐ of the nickel coated specimens was still < 0.2 µm.

In a third step said nickel coated specimens were subjected to chromium deposition in the above mentioned deposition bath samples in respective deposition scenarios and a chromium alloy layer comprising minimal amounts of carbon was deposited. In each scenario, the deposition was carried out for 45 minutes at 40 A/dm² cathodic current density with graphite anodes and at a temperature of 50°C. After the third step chromium deposited specimens ((i), (ii), (iii), (iv), and (v)) with an average layer thickness in the range from 25 µm to 30 µm were obtained exhibiting an average surface roughness (Rₐ) as summarized in Table 2 (see also Fig. 1).

**Table 2**

| specimen | deposition bath sample | Rₐ [µm] |
|---|---|---|
| (i) | (I) | 0.17 |
| (ii) | (II) | 0.20 |
| (iii) | (III) | 0.25 |
| (iv) | (IV) | 0.26 |
| (v) | (V) | 0.34 |

Specimens (i) and (ii) were treated in a deposition bath sample comprising a total amount of sodium ions below 1 mol/L, therefore representing the advantage of the method of the present invention. Specimen (i) represents the most preferred case of not being contaminated at all with alkali metal cations (zero g/L sodium ions). As a result, specimen (i) exhibits the least average surface roughness of far below 0.20 µm, which is one of the most desired result. However, also specimen (ii) exhibits an excellent average surface roughness of about 0.2 µm. It can be concluded that the chromium deposition in the third step did not significantly increase the initial average surface roughness of the specimens.

Specimens (iii), (iv), and (v) were treated in deposition bath samples comprising more than 1 mol/L of alkali metal cations, thus, representing the disadvantage of many common trivalent chromium deposition methods utilizing alkali metal cation containing compounds. The disadvantage is a significantly increased average surface roughness.

The average surface roughness was for each specimen determined in the middle of the rod at four different positions.

As strongly indicated by Example 1 the average surface roughness increases with an increasing total amount of alkali metal cations and, thus, clearly shows the relationship between the total amount of alkali metal cations in an aqueous deposition bath and the average surface roughness of respective substrates.

This relationship can advantageously be utilized in the method of the present invention in order to control the average surface roughness of substrates by carefully using alkali metal cation free hydroxides.

### Example 2

In a first step a 25 L aqueous deposition bath was provided with a target pH within the range from 5.3 to 5.9 (at 20°C) and comprising a tolerance range of ± 0.3 pH units. The pH was adjusted with alkali metal cation free compounds. The bath furthermore contained a typical amount of 10 g/L to 30 g/L trivalent chromium ions, 50 g/L to 250 g/L sulfate ions, at least one organic complexing compound (an aliphatic mono carboxylic organic acid), ammonium ions, and bromide ions (no boron containing compounds have been used). The total amount of alkali metal cations was almost zero, and thus, within the very preferred range from 0 mol/L to 0.2 mol/L. For preparing the aqueous deposition bath a substantially alkali metal cation free, soluble, trivalent chromium ion containing source was utilized (which is typically a source comprising alkali metal cations in a total amount of 1 weight-% or less, based on the total weight of the source) in a total amount of significantly less than 100 g per liter deposition bath (for details see Example 1).

In a second step a plurality of specimens (10 mm diameter nickel coated mild steel rods; not pre-ground and not polished; initial Rₐ > 0.2 µm) was provided and subsequently subjected to nickel deposition as described in Example 1. The anodes used during Example 2 were graphite anodes.

In a third step some of the specimens were consecutively immersed in the aqueous deposition bath and an electrical direct current (DC) of 40 A/dm² cathodic current density was applied for 45 minutes. The temperature of the deposition bath was 50°C. As a result, a chromium alloy layer (containing chromium and minimal amounts of carbon) was deposited onto these first specimens. After some specimens have been treated (i.e. step (c) of the method of the present invention was repeated several times) the target pH of the deposition bath had a decreased pH value compared to the target pH. Therefore, an addition of hydroxide was necessary in order to recover a pH value within the above mentioned tolerance range. For that purpose NH₄OH was used. This procedure was continued until a deposition bath usage of approximately 180 Ah/L was reached. Until 180 Ah/L was reached, twelve specimens were treated according to the method of the present invention.

In Fig. 2 this procedure is graphically depicted and designated as section A. In Fig. 2 also the average surface roughness (Rₐ) is shown for each of the twelve specimens. Most of the specimens do not exceed an average surface roughness of 0.4 µm; an average surface roughness of 0.6 µm is never exceeded. It can be concluded that during section A the average surface roughness was comparatively low and constant for a functional chromium alloy layer obtained from an aqueous deposition bath as defined above.

After 180 Ah/L (i.e. after the 12^{th} specimen was treated) the target pH was recovered by adding NaOH instead of NH₄OH (not according to the method of the present invention). A number of specimens were utilized for dummy plating during the interval from 180 Ah/L to 230 Ah/L in order to allow the deposition bath to adapt to this difference.

Fig. 2, section B (from 230 Ah/L to 390 Ah/L) represents a comparative example, showing the effect on the average surface roughness if NaOH is used.

As depicted in Fig. 2 section B, the average surface roughness quickly increased up to 1 µm or even more. Example 2 was terminated at 390 Ah/L over-all usage (approximately 4 month usage) of the aqueous deposition bath (or in other words after another 160 Ah/L beginning at 230 Ah/L) and 9 further specimens were treated during the comparative example. The last specimen obtained after 390 Ah/L exhibited a maximum average surface roughness of more than 1.6 µm. Fig. 2 strongly indicates that even beyond 390 Ah/L the average surface roughness will most likely further increase.

The average layer thickness of the deposited chromium alloy layer was in the range from 25 µm to 30 µm for each specimen (sections A and B). The average surface roughness was determined as described in Example 1.

The comparative example shows that the deposition during section B is not any longer controlled in the sense of the present invention, i.e. in terms of average surface roughness of the treated substrates. It furthermore indicates that over a long usage of an aqueous deposition bath the average surface roughness continually increases up to undesired values such as beyond 0.8 µm. Such an increase can be successfully avoided by the method of the present invention. Based on section A it can be reasonably concluded that the average surface roughness remains comparatively constant for at least a long usage of the deposition bath, even up to the entire life time of the deposition bath. Furthermore, in section A functional chromium alloy layers were obtained, characterized by the excellent hardness and wear resistance as mentioned in the text above.

## Claims

1. A controlled method for depositing a chromium or chromium alloy layer on at least one substrate, the method comprising the steps
(a) providing an aqueous deposition bath, wherein
the bath comprises
- trivalent chromium ions,
- bromide ions,
- alkali metal cations in a total amount of 0 mol/L to 1 mol/L, based on the total volume of the deposition bath and referring to the sum of individual maximum amounts of metal cations of lithium, sodium, potassium, rubidium, cesium, and francium, and
the bath has
- a target pH within the range from 4.1 to 7.0,
(b) providing the at least one substrate and at least one anode,
(c) immersing the at least one substrate in the aqueous deposition bath and applying an electrical direct current such that the chromium or chromium alloy layer is deposited on the substrate, the substrate being the cathode,
wherein during or after step (c) the pH of the deposition bath is lower than the target pH,
(d) adding NH₄OH and/or NH₃ during or after step (c) to the deposition bath such that the target pH of the deposition bath is recovered.

2. The method of claim 1, wherein the total amount of alkali metal cations in the deposition bath is in the range from 0 mol/L to 0.8 mol/L, based on the total volume of the deposition bath, preferably in the range from 0 mol/L to 0.6 mol/L, more preferably in the range from 0 mol/L to 0.4 mol/L, even more preferably in the range from 0 mol/L to 0.2 mol/L.

3. The method of claim 1 or 2, wherein the method is a continuous method, meaning that
steps (a) to (d) are continually repeated, and/or
step (c) is at least once repeated with another substrate before step (d) is carried out.

4. The method of any of the aforementioned claims, wherein the target pH is within the range from 4.5 to 6.5, preferably within the range from 5.0 to 6.0, most preferably within the range from 5.3 to 5.9.

5. The method of any of the aforementioned claims, wherein the aqueous deposition bath does not contain or contains a total amount of less than 10 mg/L, based on the total volume of the deposition bath, of sulfur containing compounds with a sulfur atom having an oxidation number below +6 and boron containing compounds.

6. The method of any of the aforementioned claims, wherein the layer deposited in step (c) is amorphous, determined by x-ray diffraction.

7. The method of any of the aforementioned claims, wherein
in step (c) the chromium or chromium alloy layer is directly deposited onto the at least one substrate, or
the at least one substrate defined in step (b) additionally comprises a nickel or nickel alloy layer and in step (c) the chromium or chromium alloy layer is deposited thereon.

8. The method of any of the aforementioned claims, wherein the average layer thickness of the chromium or chromium alloy layer deposited in step (c) is 1.0 µm or more, preferably 2 µm or more, more preferably 4 µm or more, even more preferably 5 µm or more, most preferably the average layer thickness is in the range from 5 µm to 200 µm, preferably 5 µm to 150 µm.

9. The method of any of the aforementioned claims, wherein the layer deposited in step (c) has an average surface roughness Rₐ of 0.6 µm or less, based on an average layer thickness of at least 20 µm, preferably of 0.5 µm or less, more preferably of 0.4 µm or less.

10. The method of any of the aforementioned claims, wherein the at least one substrate and the at least one anode are present in the aqueous deposition bath such that the trivalent chromium ions are in contact with the at least one anode.

11. An aqueous deposition bath for depositing a chromium or chromium alloy layer, the bath comprising
(i) trivalent chromium ions in a total amount in the range from 17 g/L to 30 g/L, based on the total volume of the deposition bath,
(ii) at least one organic complexing compound,
(iii) ammonium ions,
(iv) at least one species of halide ions, wherein the at least one species is bromide, and
(v) alkali metal cations in a total amount of 0 mol/L to 1 mol/L, based on the total volume of the deposition bath and referring to the sum of individual maximum amounts of metal cations of lithium, sodium, potassium, rubidium, cesium, and francium,
wherein
- said trivalent chromium ions are from a soluble, trivalent chromium ion containing source, said source being utilized in a total weight of less than 100 g per liter aqueous deposition bath and said source comprising alkali metal cations in a total amount of 1 weight-% or less, based on the total weight of the utilized source,
- the pH of the bath is in the range from 4.1 to 7.0,
- the bath does not contain or contains a total amount of less than 10 mg/L, based on the total volume of the deposition bath, of sulfur containing compounds with a sulfur atom having an oxidation number below +6, and
- the bath does not contain or contains a total amount of less than 10 mg/L, based on the total volume of the deposition bath, of boron containing compounds.

12. The bath of claim 11, wherein the sum of the total weight of the trivalent chromium ions and the total weight of the ammonium ions corresponds to 90 weight-% or more of the total weight of all cations in the aqueous deposition bath, preferably 95 weight-% or more, more preferably 98 weight-% or more.

13. The bath of claim 11 or 12, wherein the total amount of bromide ions in the deposition bath is at least 0.06 mol/L, based on the total volume of the deposition bath, preferably at least 0.1 mol/L, more preferably at least 0.15 mol/L.

14. The bath of any of claims 11 to 13, wherein the soluble, trivalent chromium ion containing source comprises or is chromium sulfate, preferably acidic chromium sulfate, more preferably chromium sulfate with the general formula Cr₂(SO₄)₃ and a molecular weight of 392 g/mol.

15. The bath of any of claims 11 to 14, wherein the source is utilized in a total weight in the range from 70 g to 99.9 g per liter aqueous deposition bath, preferably in the range from 70 g to 99 g, more preferably in the range from 70 g to 95 g, most preferably in the range from 70 g to 90 g.

## Patentansprüche

1. Gesteuertes Verfahren zur Abscheidung einer Chrom- bzw. Chromlegierungsschicht auf mindestens einem Substrat, wobei das Verfahren folgende Schritte umfasst:
(a) Bereitstellen eines wässrigen Abscheidungsbads, wobei
das Bad
- dreiwertige Chromionen,
- Bromidionen,
- Alkalimetallkationen in einer Gesamtmenge von 0 mol/l bis 1 mol/l, basierend auf dem Gesamtvolumen des Abscheidungsbads und bezogen auf die Summe der einzelnen maximalen Mengen von Metallkationen von Lithium, Natrium, Kalium, Rubidium, Caesium und Francium,
umfasst und
das Bad
- einen Ziel-pH-Wert innerhalb im Bereich von 4,1 bis 7,0 aufweist,
(b) Bereitstellen des mindestens einen Substrats und mindestens eine Anode,
(c) Eintauchen des mindestens einen Substrats in das wässrige Abscheidungsbad und Anlegen eines elektrischen Gleichstroms derart, dass die Chrom- bzw. Chromlegierungsschicht auf dem Substrat abgeschieden wird, wobei das Substrat die Kathode ist,
wobei während oder nach Schritt (c) der pH-Wert des Abscheidungsbads kleiner als der Ziel-pH-Wert ist,
(d) Zugeben von NH₄OH und/oder NH₃ während oder nach Schritt (c) zu dem Abscheidungsbad derart, dass der Ziel-pH-Wert des Abscheidungsbads wiederhergestellt wird.

2. Verfahren nach Anspruch 1, wobei die Gesamtmenge an Alkalimetallkationen im Abscheidungsbad im Bereich von 0 mol/l bis 0,8 mol/l, basierend auf dem Gesamtvolumen des Abscheidungsbads, vorzugsweise im Bereich von 0 mol/l bis 0,6 mol/l, weiter bevorzugt im Bereich von 0 mol/l bis 0,4 mol/l, noch weiter bevorzugt im Bereich von 0 mol/l bis 0,2 mol/l, liegt.

3. Verfahren nach Anspruch 1 oder 2, wobei es sich bei dem Verfahren um ein kontinuierliches Verfahren handelt, was bedeutet, dass
die Schritte (a) bis (d) fortlaufend wiederholt werden und/oder
Schritt (c) mindestens einmal mit einem anderen Substrat wiederholt wird, bevor Schritt (d) durchgeführt wird.

4. Verfahren nach einem der vorhergehenden Ansprüche, wobei der Ziel-pH-Wert innerhalb im Bereich von 4,5 bis 6,5, vorzugsweise im Bereich von 5,0 bis 6,0, ganz besonders bevorzugt im Bereich von 5,3 bis 5,9, liegt.

5. Verfahren nach einem der vorhergehenden Ansprüche, wobei das wässrige Abscheidungsbad keine schwefelhaltigen Verbindungen mit einem Schwefelatom mit einer Oxidationszahl unter +6 und borhaltigen Verbindungen enthält oder solche Verbindungen in einer Gesamtmenge von weniger als 10 mg/l, basierend auf dem Gesamtvolumen des Abscheidungsbads, enthält.

6. Verfahren nach einem der vorhergehenden Ansprüche, wobei die in Schritt (c) abgeschiedene Schicht gemäß Bestimmung durch Röntgenbeugung amorph ist.

7. Verfahren nach einem der vorhergehenden Ansprüche, wobei
in Schritt (c) die Chrom- bzw. Chromlegierungsschicht direkt auf dem mindestens einen Substrat abgeschieden wird oder
das in Schritt (b) definierte mindestens eine Substrat zusätzlich eine Nickel- bzw. Nickellegierungsschicht umfasst und in Schritt (c) die Chrom- bzw. Chromlegierungsschicht darauf abgeschieden wird.

8. Verfahren nach einem der vorhergehenden Ansprüche, wobei die durchschnittliche Schichtdicke der in Schritt (c) abgeschiedenen Chrom- bzw. Chromlegierungsschicht 1,0 µm oder mehr, vorzugsweise 2 µm oder mehr, weiter bevorzugt 4 µm oder mehr, noch weiter bevorzugt 5 µm oder mehr, liegt und die durchschnittliche Schichtdicke ganz besonders bevorzugt im Bereich von 5 µm bis 200 µm, vorzugsweise 5 µm bis 150 µm, liegt.

9. Verfahren nach einem der vorhergehenden Ansprüche, wobei die in Schritt (c) abgeschiedene Schicht eine durchschnittliche Oberflächenrauheit Rₐ von 0,6 µm oder weniger, basierend auf einer durchschnittlichen Schichtdicke von mindestens 20 µm, vorzugsweise von 0,5 µm oder weniger, weiter bevorzugt von 0,4 µm oder weniger, aufweist.

10. Verfahren nach einem der vorhergehenden Ansprüche, wobei das mindestens eine Substrat und die mindestens eine Anode in dem wässrigen Abscheidungsbad derart vorliegen, dass die dreiwertigen Chromionen mit der mindestens einen Anode in Kontakt stehen.

11. Wässriges Abscheidungsbad zum Abscheiden einer Chrom- bzw. Chromlegierungsschicht, wobei das Bad
(i) dreiwertige Chromionen in einer Gesamtmenge im Bereich von 17 g/l bis 30 g/l, basierend auf dem Gesamtvolumen des Abscheidungsbads,
(ii) mindestens eine organische komplexierende Verbindung,
(iii) Ammoniumionen,
(iv) mindestens eine Spezies von Halogenidionen, wobei es sich bei der mindestens einen Spezies um Bromid handelt, und
(v) Alkalimetallkationen in einer Gesamtmenge von 0 mol/l bis 1 mol/l, basierend auf dem Gesamtvolumen des Abscheidungsbads und bezogen auf die Summe der einzelnen maximalen Mengen von Metallkationen von Lithium, Natrium, Kalium, Rubidium, Caesium und Francium,
umfasst, wobei
- die dreiwertigen Chromionen aus einer löslichen, dreiwertige Chromionen enthaltenden Quelle stammen, wobei die Quelle in einer Gesamtmenge von weniger als 100 g pro Liter wässriges Abscheidungsbad verwendet wird und wobei die Quelle Alkalimetallkationen in einer Gesamtmenge von 1 Gew.-% oder weniger, basierend auf dem Gesamtgewicht der verwendeten Quelle, umfasst,
- der pH-Wert des Bads im Bereich von 4,1 bis 7,0 liegt,
- das Bad keine schwefelhaltigen Verbindungen mit einem Schwefelatom mit einer Oxidationszahl unter +6 enthält oder solche Verbindungen in einer Gesamtmenge von weniger als 10 mg/l, basierend auf dem Gesamtvolumen des Abscheidungsbads, enthält und
- das Bad keine borhaltigen Verbindungen enthält oder solche Verbindungen in einer Gesamtmenge von weniger als 10 mg/l, basierend auf dem Gesamtvolumen des Abscheidungsbads, enthält.

12. Bad nach Anspruch 11, wobei die Summe des Gesamtgewichts der dreiwertigen Chromionen und des Gesamtgewichts der Ammoniumionen 90 Gew.-% oder mehr des Gesamtgewichts aller Kationen im wässrigen Abscheidungsbad, vorzugsweise 95 Gew.-% oder mehr, weiter bevorzugt 98 Gew.-% oder mehr, entspricht.

13. Bad nach Anspruch 11 oder 12, wobei die Gesamtmenge an Bromidionen im Abscheidungsbad mindestens 0,06 mol/l, basierend auf dem Gesamtvolumen des Abscheidungsbads, vorzugsweise mindestens 0,1 mol/l, weiter bevorzugt mindestens 0,15 mol/l, beträgt.

14. Bad nach einem der Ansprüche 11 bis 13, wobei die lösliche, dreiwertige Chromionen enthaltende Quelle Chromsulfat, vorzugsweise saures Chromsulfat, weiter bevorzugt Chromsulfat mit der allgemeinen Formel Cr₂(SO₄)₃ und einem Molekulargewicht von 392 g/mol, umfasst oder ist.

15. Bad nach einem der Ansprüche 11 bis 14, wobei die Quelle in einer Gesamtmenge von 70 g bis 99,9 g pro Liter wässriges Abscheidungsbad, vorzugsweise im Bereich von 70 g bis 99 g, weiter bevorzugt im Bereich von 70 g bis 95 g, ganz besonders bevorzugt im Bereich von 70 g bis 90 g, verwendet wird.

## Revendications

1. Procédé contrôlé destiné à déposer une couche de chrome ou d'alliage de chrome sur au moins un substrat, le procédé comprenant les étapes suivantes :
(a) obtention d'un bain de dépôt aqueux,
le bain comprenant
- des ions de chrome trivalent,
- des ions bromure,
- des cations de métaux alcalins dans une quantité totale de 0 mol/L à 1 mol/L, rapporté au volume total du bain de dépôt et en référence à la somme de quantités individuelles maximales de cations métalliques de lithium, sodium, potassium, rubidium, césium, et francium, et
le bain ayant
- un pH cible dans la fourchette de 4,1 à 7,0,
(b) obtention de l'au moins un substrat et d'au moins une anode,
(c) immersion de l'au moins un substrat dans le bain de dépôt aqueux et application d'un courant électrique continu de telle sorte que la couche de chrome ou d'alliage chromé soit déposée sur le substrat, le substrat étant la cathode,
dans lequel, pendant ou après l'étape (c), le pH du bain de dépôt est inférieur au pH cible,
(d) ajout de NH₄OH et/ou NH₃ pendant ou après l'étape (c) au bain de dépôt de telle sorte que le pH cible du bain de dépôt soit retrouvé.

2. Procédé de la revendication 1, dans lequel la quantité totale de cations de métaux alcalins dans le bain de dépôt se situe dans la gamme de 0 mol/L à 0,8 mol/L, rapporté au volume total du bain de dépôt, de préférence dans la gamme de 0 mol/L à 0,6 mol/L, mieux dans la gamme de 0 mol/L à 0,4 mol/L, mieux encore dans la gamme de 0 mol/L à 0,2 mol/L.

3. Procédé de la revendication 1 ou 2, le procédé étant un procédé continu, ce qui signifie que
les étapes (a) à (d) sont répétées de façon continue, et/ou
l'étape (c) est répétée au moins une fois avec un autre substrat avant que l'étape (d) soit réalisée.

4. Procédé de l'une quelconque des revendications précédentes, dans lequel le pH cible se situe dans la fourchette de 4,5 à 6,5, de préférence dans la fourchette de 5,0 à 6,0, idéalement dans la fourchette de 5,3 à 5,9.

5. Procédé de l'une quelconque des revendications précédentes, dans lequel le bain de dépôt aqueux ne contient pas ou contient une quantité totale de moins de 10 mg/L, rapporté au volume total du bain de dépôt, de composés contenant du soufre avec un atome de soufre ayant un nombre d'oxydation inférieur à +6 et de composés contenant du bore.

6. Procédé de l'une quelconque des revendications précédentes, dans lequel la couche déposée à l'étape (c) est amorphe, déterminé par diffraction des rayons X.

7. Procédé de l'une quelconque des revendications précédentes, dans lequel,
à l'étape (c), la couche de chrome ou d'alliage de chrome est directement déposée sur l'au moins un substrat, ou
l'au moins un substrat défini à l'étape (b) comprend également une couche de nickel ou d'alliage de nickel et, à l'étape (c), la couche de chrome ou d'alliage de chrome est déposée par-dessus.

8. Procédé de l'une quelconque des revendications précédentes, dans lequel l'épaisseur de couche moyenne de la couche de chrome ou d'alliage de chrome déposée à l'étape (c) est de 1,0 µm ou plus, de préférence 2 µm ou plus, mieux 4 µm ou plus, mieux encore 5 µm ou plus, idéalement l'épaisseur de couche moyenne se situe dans la gamme de 5 µm à 200 µm, de préférence 5 µm à 150 µm.

9. Procédé de l'une quelconque des revendications précédentes, dans lequel la couche déposée à l'étape (c) a une rugosité de surface moyenne Rₐ de 0,6 µm ou moins, rapporté à une épaisseur de couche moyenne d'au moins 20 µm, de préférence de 0,5 µm ou moins, mieux encore de 0,4 µm ou moins.

10. Procédé de l'une quelconque des revendications précédentes, dans lequel l'au moins un substrat et l'au moins une anode sont présents dans le bain de dépôt aqueux de telle sorte que les ions de chrome trivalent sont en contact avec l'au moins une anode.

11. Bain de dépôt aqueux destiné à déposer une couche de chrome ou d'alliage de chrome, le bain comprenant
(i) des ions de chrome trivalent dans une quantité totale dans la gamme de 17 g/L à 30 g/L, rapporté au volume total du bain de dépôt,
(ii) au moins un composé complexant organique,
(iii) des ions ammonium,
(iv) au moins une espèce d'ions halogénure, l'au moins une espèce étant le bromure, et
(v) des cations de métaux alcalins dans une quantité totale de 0 mol/L à 1 mol/L, rapporté au volume total du bain de dépôt et en référence à la somme de quantités individuelles maximales de cations métalliques de lithium, sodium, potassium, rubidium, césium, et francium,
dans lequel
- lesdits ions de chrome trivalent proviennent d'une source soluble contenant des ions de chrome trivalent, ladite source étant utilisée dans un poids total de moins de 100 g par litre de bain de dépôt aqueux et ladite source comprenant des cations de métaux alcalins dans une quantité totale de 1 % en poids ou moins, rapporté au poids total de la source utilisée,
- le pH du bain se situe dans la fourchette de 4,1 à 7,0,
- le bain ne contient pas ou contient une quantité totale de moins de 10 mg/L, rapporté au volume total du bain de dépôt, de composés contenant du soufre avec un atome de soufre ayant un nombre d'oxydation inférieur à +6, et
- le bain ne contient pas ou contient une quantité totale de moins de 10 mg/L, rapporté au volume total du bain de dépôt, de composés contenant du bore.

12. Bain de la revendication 11, la somme du poids total des ions de chrome trivalent et du poids total des ions ammonium correspondant à 90 % en poids ou plus du poids total de tous les cations dans le bain de dépôt aqueux, de préférence 95 % en poids ou plus, mieux encore 98 % en poids ou plus.

13. Bain de la revendication 11 ou 12, la quantité totale d'ions bromure dans le bain de dépôt étant d'au moins 0,06 mol/L, rapporté au volume total du bain de dépôt, de préférence au moins 0,1 mol/L, mieux encore au moins 0,15 mol/L.

14. Bain de l'une quelconque des revendications 11 à 13, la source soluble contenant des ions de chrome trivalent comprenant ou étant du sulfate de chrome, de préférence du sulfate de chrome acide, mieux encore du sulfate de chrome avec la formule générale Cr₂(SO₄)₃ et un poids moléculaire de 392 g/mol.

15. Bain de l'une quelconque des revendications 11 à 14, la source étant utilisée dans un poids total dans la gamme de 70 g à 99,9 g par litre de bain de dépôt aqueux, de préférence dans la gamme de 70 g à 99 g, mieux encore dans la gamme de 70 g à 95 g, idéalement dans la gamme de 70 g à 90 g.
